# EUROPEAN PATENT APPLICATION

(11) **EP 4 209 947 A1**
(43) Date of publication of application: **12.07.2023**
(21) Application number: 20957167.8
(22) Date of filing: 15.10.2020
(51) Int. Cl.: G06F 21/52

(54) **PROCESSOR SECURITY MEASUREMENT DEVICE AND METHOD**

(71) Applicant: Huawei Technologies Co., Ltd., Shenzhen, Guangdong 518129 (CN)
(72) Inventor: PAN, Shilin, Shenzhen, Guangdong 518129 (CN); ZHOU, Ziming, Shenzhen, Guangdong 518129 (CN); JIA, Minhu, Shenzhen, Guangdong 518129 (CN)
(74) Representative: Gill Jennings & Every LLP
(86) International application number: PCT/CN2020/121303
(87) International publication number: WO 2022/077388

(57) **Abstract**

A security assessment apparatus and method for a processor are disclosed, and relate to the field of electronic technologies, to improve security during running of the processor. The security assessment apparatus includes: a processor (101), configured to run instructions in a memory (105); an access controller (103), configured to control a processor tracker (102) to access a first storage area in the memory (105), where the processor (101) is prohibited from accessing the first storage area; the processor tracker (102), configured to obtain first address information of a first instruction in the instructions in the memory (105), and store the first address information in the first storage area; and a security protection system (104), configured to obtain the first address information from the first storage area, and assess security of the first instruction based on the first address information.

## Description

### TECHNICAL FIELD

This application relates to the field of electronic technologies, and in particular, to a security assessment apparatus and method for a processor.

### BACKGROUND

With development of communication technologies, popularization of mobile terminals, and openness and flexibility of the mobile terminals, a security problem of a system gradually emerges. Therefore, there is a need to design a mobile terminal with a security assessment function. Security assessment usually means assessing integrity of a system and/or information, and the integrity of the system includes at least integrity of a system image (image). Currently, the integrity of the system image of the mobile terminal is ensured through secure boot signature verification during a startup process. However, there is no method to verify integrity of an image when the system is running.

Currently, integrity verification during running of a server system is usually implemented by using a trusted platform module (trusted platform module, TPM) or a trusted platform control module (trusted platform control module, TPCM). Both assessment methods used by the TPM and the TPCM are to perform a hash operation on a to-be-assessed program according to a hash algorithm, and then compare a hash operation result with a specified hash value (for example, a plurality of valid hash values). If the hash operation result is consistent with the specified hash value, the image is considered complete when the system is running. The only difference between the TPM and the TPCM lies in that the TPM reports the hash operation result to a trusted server, and the trusted server performs the verification. However, the TPCM usually performs the verification locally according to a configuration rule of the trusted server.

However, the foregoing security assessment methods have a risk of bypassing an attack. For example, a hacker damages system integrity by bypassing the system image to run a fake system image, instead of modifying an original system image. However, because the original system image does not change, a security assessment module considers that the system image is complete. Therefore, how to improve security during running of the system is still a problem.

### SUMMARY

This application provides a security assessment apparatus and method for a processor, to improve running security of the processor by assessing security of instruction execution in a running process of the processor. To implement the foregoing objective, the following technical solutions are used in this application.

According to a first aspect, a security assessment apparatus for a processor is provided, and the apparatus includes: a processor, configured to run instructions in a memory; an access controller, configured to control a processor tracker to access a first storage area in the memory, where the first storage area may be an access area pre-allocated by the access controller to the processor tracker, and the processor is prohibited from accessing the first storage area; the processor tracker, configured to obtain first address information of a first instruction (the first instruction may be an instruction sequence, that is, include a plurality of ordered instructions) in the instructions in the memory, and store the first address information in the first storage area, where, for example, the access controller performs access authentication on the step in which the processor tracker stores the first address information in the first storage area, and after the authentication succeeds, allows the processor tracker to store the first address information in the first storage area; and a security protection system, configured to obtain the first address information from the first storage area, and assess security of the first instruction based on the first address information.

In the foregoing technical solution, in a running process of the processor, the processor tracker is used to track and capture the first address information of the first instruction executed by the processor, and after the access authentication performed by the access controller, the processor tracker stores the first address information in the first storage area in the memory. Because the first instruction is an instruction currently executed by the processor, and the processor is prohibited from accessing the first storage area, a hacker cannot tamper with information in the first storage area by using the processor. In this way, after obtaining the first address information from the first storage area, the security protection system can assess the security of the first instruction based on the first address information, to improve accuracy and effectiveness of the security assessment, so as to ensure running security of the processor.

In a possible implementation of the first aspect, the security protection system, the processor, the processor tracker, and the access controller are located in a system on chip SoC. In the foregoing possible implementation, units in the security assessment apparatus are integrated into the SoC, so that an end-to-end communication delay can be reduced, an area of the security assessment apparatus can be reduced, and costs can be reduced.

In a possible implementation of the first aspect, the security protection system is further configured to: when the first address information falls within a valid address range (for example, the valid address range includes a plurality of pieces of address information, and the first address information is consistent with one piece of address information in the plurality of pieces of address information), determine that the first instruction is secure; or when the first address information falls outside the valid address range (for example, the valid address range includes a plurality of pieces of address information, and the first address information is inconsistent with each piece of address information in the plurality of pieces of address information), determine that the first instruction is insecure.

In another possible implementation of the first aspect, the security protection system is further configured to: when the first address information falls within a valid address range, and the first instruction is consistent with a second instruction within the valid address range, determine that the first instruction is secure; or when the first address information falls outside the valid address range, or the first instruction is inconsistent with a second instruction within the valid address range, determine that the first instruction is insecure.

The valid address range may be preset, or the processor may send the valid address range to the security protection system in a startup process, so that the security protection system 104 obtains the valid address range. A manner of determining the security of the first instruction provided in the foregoing two possible implementations is simple and effective. The first instruction is an instruction currently executed by the processor. Therefore, running security of the processor can be ensured by assessing the security of the first instruction.

In a possible implementation of the first aspect, the first instruction includes an instruction of a monitoring thread; and the security protection system is further configured to send interrupt information to the processor, where the interrupt information indicates the processor to start the monitoring thread, the interrupt information may be non-maskable interrupt information, that is, the interrupt information cannot be disabled, and the processor immediately executes a task corresponding to the interrupt information when receiving the interrupt information; the processor is further configured to: when receiving the interrupt information, start the instruction of the monitoring thread, and trigger the processor tracker by using the monitoring thread; and the processor tracker is further configured to store the first address information in the first storage area based on the triggering of the monitoring thread. In the foregoing possible implementation, the security protection system may trigger, by sending the interrupt information to the processor, the processor tracker to store the first address information in the first storage area, so that the security protection system obtains the first address information from the first storage area, and assess the security of the first instruction based on the first address information, to improve accuracy and effectiveness of the security assessment, so as to ensure running security of the processor.

Further, the security protection system is further configured to: when it is determined that a preset condition is satisfied, send the interrupt information to the processor. The preset condition may be one of the following: A specified event occurs, and preset duration for sending the interrupt information reaches. The specified event includes but is not limited to a facial recognition event, a fingerprint recognition event, an unlock event, a payment event, a data rewriting event, a first login event, or the like. In addition, the preset duration may be set in advance. For example, the preset duration may be a fixed value, or may be a plurality of change values (for example, each value corresponds to a different time period).

In a possible implementation of the first aspect, the processor is further configured to: perform a security check on running status information of the processor by using the monitoring thread, to obtain a check result, and send the check result to the security protection system. In the foregoing possible implementation, when it is determined that the monitoring thread is secure, the processor may further perform the security check on the running status information of the processor by using the monitoring thread, to monitor and detect fine-grained status information of the processor, so as to further ensure running security of the processor.

In a possible implementation of the first aspect, the memory further includes a second storage area configured to store image information of the processor, where the image information includes the instructions run by the processor, for example, the image information may include instructions corresponding to a plurality of applications or programs on the processor, and a system file, a boot file, and the like of the processor; and the security protection system is further configured to obtain the image information from the second storage area, and assess integrity of the image information. In the foregoing possible implementation, the security protection system can ensure security of various software running on the processor by assessing the integrity of the image information of the processor, and further ensure running security of the processor.

In a possible implementation of the first aspect, the security protection system is further configured to: perform a hash operation on the image information to obtain a hash value; compare the hash value with a preset hash value; when the hash value is consistent with the preset hash value, determine that the image information is complete; or when the hash value is inconsistent with the preset hash value, determine that the image information is incomplete. In the foregoing possible implementation, the security protection system calculates the hash value of the image information, and determines integrity of the image information based on whether the hash value is consistent with the preset hash value. Therefore, difficulty of determining the integrity of the image information is reduced, and an integrity check rate is increased.

In a possible implementation of the first aspect, the security protection system is further configured to: when determining that the processor is insecure (for example, the first instruction is insecure, the running status information of the processor is insecure, or the image information is incomplete), perform a security protection operation on the processor. The security protection operation herein may include but is not limited to: triggering an alarm, resetting the processor, rejecting a service requested by software, indicating the processor to stop running, indicating the processor to stop running the software, disabling at least some functions of the software run by the processor, preventing the software from accessing data stored in the memory, or the like. Security of the processor can be ensured by performing the security protection operation on the processor.

According to a second aspect, a security assessment method for a processor is provided, and the method includes: A processor runs instructions in a memory; an access controller controls a processor tracker to access a first storage area in the memory, where the first storage area may be an access area pre-allocated by the access controller to the processor tracker, and the processor is prohibited from accessing the first storage area; the processor tracker obtains first address information of a first instruction (the first instruction may be an instruction sequence, that is, include a plurality of ordered instructions) in the instructions that are in the memory and that are run by the processor, and stores the first address information in the first storage area, where, for example, the access controller performs access authentication on the step in which the processor tracker stores the first address information in the first storage area, and after the authentication succeeds, allows the processor tracker to store the first address information in the first storage area; and a security protection system obtains the first address information from the first storage area, and assesses security of the first instruction based on the first address information.

In a possible implementation of the second aspect, that the security protection system assesses security of the first instruction based on the first address information includes: When the first address information falls within a valid address range (for example, the valid address range includes a plurality of pieces of address information, and the first address information is consistent with one piece of address information in the plurality of pieces of address information), determining that the first instruction is secure; or when the first address information falls outside the valid address range (for example, the valid address range includes a plurality of pieces of address information, and the first address information is inconsistent with each piece of address information in the plurality of pieces of address information), determining that the first instruction is insecure.

In a possible implementation of the second aspect, that the security protection system assesses security of the first instruction based on the first address information includes: When the first address information falls within a valid address range, and the first instruction is consistent with a second instruction within the valid address range, determining that the first instruction is secure; or when the first address information falls outside the valid address range, or the first instruction is inconsistent with a second instruction within the valid address range, determining that the first instruction is insecure.

In a possible implementation of the second aspect, the instructions in the memory include an instruction of a monitoring thread, and the method further includes: The security protection system sends interrupt information to the processor, where the interrupt information indicates the processor to start the monitoring thread, the interrupt information may be non-maskable interrupt information, that is, the interrupt information cannot be disabled, and the processor immediately executes a task corresponding to the interrupt information when receiving the interrupt information; when receiving the interrupt information, the processor starts the instruction of the monitoring thread, and triggers the processor tracker by using the monitoring thread; and the processor tracker stores the first address information in the first storage area based on the triggering of the monitoring thread. Further, the security protection system is further configured to: when it is determined that a preset condition is satisfied, send the interrupt information to the processor. The preset condition may be one of the following: A specified event occurs, and preset duration for sending the interrupt information reaches. The specified event includes but is not limited to a facial recognition event, a fingerprint recognition event, an unlock event, a payment event, a data rewriting event, a first login event, or the like. In addition, the preset duration may be set in advance. For example, the preset duration may be a fixed value, or may be a plurality of change values (for example, each value corresponds to a different time period).

In a possible implementation of the second aspect, the method further includes: The processor performs a security check on running status information of the processor by using the monitoring thread, to obtain a check result, and sends the check result to the security protection system. That is, when it is determined that the monitoring thread is secure, the processor may further perform the security check on the running status information of the processor by using the monitoring thread, to monitor and detect fine-grained status information of the processor.

In a possible implementation of the second aspect, the memory further includes a second storage area configured to store image information of the processor, where the image information includes the instructions run by the processor, for example, the image information may include instructions corresponding to a plurality of applications or programs on the processor, and a system file, a boot file, and the like of the processor, and the method further includes: The security protection system obtains the image information from the second storage area, and assesses integrity of the image information.

In a possible implementation of the second aspect, that the security protection system assesses integrity of the image information includes: performing a hash operation on the image information to obtain a hash value; comparing the hash value with a preset hash value; when the hash value is consistent with the preset hash value, determining that the image information is complete; or when the hash value is inconsistent with the preset hash value, determining that the image information is incomplete.

In a possible implementation of the second aspect, the method further includes: When determining that the processor is insecure (for example, the first instruction is insecure, the running status information of the processor is insecure, or the image information is incomplete), the security protection system performs a security protection operation on the processor. The security protection operation herein may include but is not limited to: triggering an alarm, resetting the processor, rejecting a service requested by software, indicating the processor to stop running, indicating the processor to stop running the software, disabling at least some functions of the software run by the processor, preventing the software from accessing data stored in the memory, or the like.

According to a third aspect, an electronic device is provided, including the security assessment apparatus according to the first aspect or any implementation of the first aspect and the memory. Optionally, the electronic device is a terminal device.

It may be understood that any security assessment method provided above is used to perform a function of the corresponding security assessment apparatus provided above. Therefore, for beneficial effects that can be achieved by the security assessment method, refer to beneficial effects of the corresponding security assessment apparatus provided above. Details are not described herein again.

### BRIEF DESCRIPTION OF DRAWINGS

FIG. 1 is a schematic diagram of verifying integrity of a system image according to an embodiment of this application;
FIG. 2 is a schematic diagram of attacking integrity of a system image according to an embodiment of this application;
FIG. 3 is a schematic diagram of a hardware architecture of a security assessment apparatus according to an embodiment of this application;
FIG. 4 is a schematic diagram of software running on a processor according to an embodiment of this application;
FIG. 5 is a schematic flowchart of a security assessment method according to an embodiment of this application;
FIG. 6 is a schematic flowchart of another security assessment method according to an embodiment of this application; and
FIG. 7 is a schematic flowchart of still another security assessment method according to an embodiment of this application.

### DESCRIPTION OF EMBODIMENTS

In this application, "at least one" means one or more, and "a plurality of" means two or more. A term "and/or" describes an association relationship between associated objects, and indicates that three relationships may exist. For example, A and/or B may indicate the following three cases: A exists alone, both A and B exist, and B exists alone, where A and B may be singular or plural. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

In embodiments of this application, terms such as "first" and "second" are used to distinguish objects with similar names, functions, or purposes. A person skilled in the art may understand that the terms such as "first" and "second" do not limit a quantity and an execution sequence. In addition, words such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present a relative concept in a specific manner.

In embodiments, a security assessment usually means assessing integrity of a system and/or information, and the integrity of the system includes at least integrity of a system image (image). The security assessment may include integrity verification in a system startup process and integrity verification in a system running process. Embodiments of this application mainly relate to the integrity verification in the system running process.

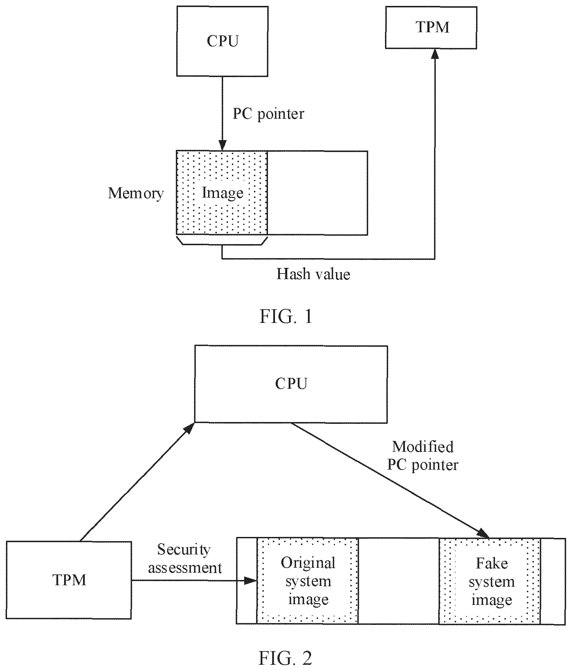

In an embodiment, the integrity verification during running of a server system is usually implemented by using a trusted platform module (trusted platform module, TPM) or a trusted platform control module (trusted platform control module, TPCM). The TPM is used as an example. As shown in FIG. 1, in a running process of a processor, the TPM mainly performs a security assessment by starting a trust chain assessment and remote attestation. That is, the TPM assesses security of each level of image level by level based on a system startup process, and the image may be stored in a memory. A location of the image in the memory may be indicated by using a program counter (program counter, PC) pointer. For the image at each level, a hash value of the image may be calculated, and the hash value is reported to a trusted server for verification. In FIG.1, an example in which the processor is a central processing unit (Central Processing Unit, CPU) is used for description.

Both assessment methods used by the TPM and the TPCM are to perform a hash operation on a to-be-assessed program according to a hash algorithm, and then compare a hash operation result with a specified hash value (for example, a plurality of valid hash values). If the hash operation result is consistent with the specified hash value, the image is considered complete when the system is running. The only difference between the TPM and the TPCM lies in that the TPM reports the hash operation result to the trusted server, and the trusted server performs the verification. However, the TPCM performs the verification locally based on a configuration of the trusted server.

However, the foregoing security assessment methods have a risk of bypassing an attack. For example, as shown in FIG. 2, a hacker does not modify an original system image, but bypasses the system image to run a fake system image, thereby damaging system integrity. However, because the original system image does not change, a security assessment module considers that the system image is complete. Based on this, embodiments of this application provide a security assessment apparatus and method for a processor, which are further optimized based on the embodiments in FIG. 1 and FIG. 2. In a running process of the processor, a current execution instruction of the processor is tracked and captured, and validity of an address of the execution instruction is assessed. That is, it is ensured that the instructions actually executed by the processor are also valid, to improve security when a system is running.

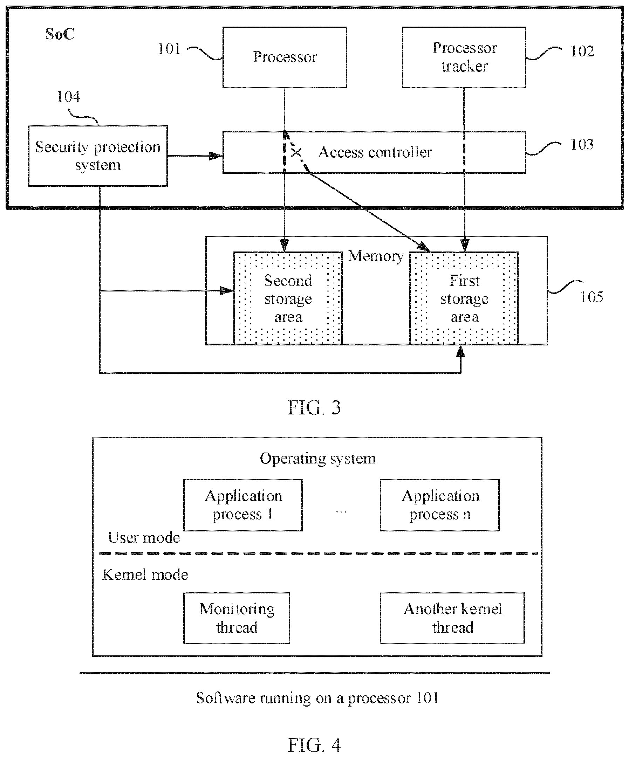

FIG. 3 is a schematic diagram of a hardware architecture of a security assessment apparatus 100 according to an embodiment of this application. The security assessment apparatus 100 may be located in an electronic device, or may be an electronic device itself. The electronic device includes, but is not limited to, a personal computer, a server computer, a handheld or laptop device, a mobile device (for example, a cell phone, a mobile phone, a tablet computer, a personal digital assistant, a media player, and the like), a wearable device, a vehicle-mounted device, a consumer electronic device, a small computer, a large computer, a mobile robot, an unmanned aerial vehicle, and the like. A typical form of the electronic device is a terminal device, such as the mobile phone. The security assessment apparatus 100 may be specifically a chip or a chipset, or a circuit board on which the chip or the chipset is mounted. The chip or the chipset, or the circuit board on which the chip or the chipset is mounted may work under necessary software driving.

As shown in FIG. 3, the security assessment apparatus 100 includes a processor 101, a processor tracker 102, an access controller 103, and a security protection system 104. The processor 101, the processor tracker 102, and the access controller 103 may be integrated in a system on chip (System of Chip, SoC). The security protection system 104 may be integrated into the SoC, or may not be integrated into the SoC. In FIG. 3, an example in which the security protection system 104 is integrated into the SoC is used for description, but not for limitation. Further, the security assessment apparatus 100 may further include a memory 105. The memory 105 may be integrated into the SoC, or may not be integrated into the SoC. In FIG. 3, an example in which the memory 105 is not integrated into the SoC is used for description.

The processor 101 may include at least one processing unit. The at least one processing unit includes but is not limited to a CPU, a network processing unit (Network Processing Unit, NPU), a graphics processing unit (Graphics Processing Unit, GPU), an application-specific integrated circuit (application-specific integrated circuit, ASIC), a field programmable gate array (Field Programmable Gate Array, FPGA), or the like. The processor 101 may run an operating system and application software required by at least one function of the operating system. For example, the operating system may include a Linux operating system, a Unix operating system, a Window operating system, or the like. The application software required by the at least one function may include kernel-mode software and user-mode software. The kernel-mode software may be software running at a kernel layer, and the user-mode software may be software running at an application layer. For example, as shown in FIG. 4, the kernel-mode software may include at least one thread. For example, the at least one thread may include a monitoring thread used to monitor running status information of the processor 101, and may further include one or more threads of various drivers such as an audio driver or a display driver. In FIG. 4, the at least one thread is collectively referred to as another kernel thread. The user-mode software may include at least one process. For example, the at least one process may include one or more processes of a plurality of applications, such as a video application, an instant messaging application, or a shopping application. In FIG. 4, an application process 1 to an application process n are used as an example for description, where n is a positive integer.

The processor tracker 102 may be a microprocessor or a logic functional circuit configured to track running of the processor 101, and is a hardware unit configured to track a status of the processor 101. For example, the processor tracker 102 may be coupled to the processor 101, and may be specifically coupled to a kernel of an operating system run by the processor 101. The processor tracker 102 is configured to obtain instructions run by the processor 101, may be specifically configured to obtain instructions or an instruction sequence (that is, including a plurality of ordered instructions) run by the processor 101, and store the instructions or the instruction sequence in the memory 105. Optionally, when the processor 101 is an advanced reduced instruction set computer machine (Advanced RISC Machine, ARM) system, the processor tracker 102 may be referred to as coresiglit. When the processor 101 is an Intel (Intel) X86 CPU, the processor tracker 102 may be referred to as a processor tracker (processor trace, PT). For example, the processor tracker 102 may be a small processor system, independent of the processor 101, and configured to implement a function of tracking running of the processor 101.

The access controller 103 is usually connected to a storage controller of the memory 105 (for example, a dynamic random access memory (DRAM)), and may be a controller configured to perform access control on the processor 101 and the processor tracker 102 (for example, performing access check and authentication on all operations that are read and written to an external DRAM). The access controller 103 may include a logic circuit, for example, a hardware circuit structure that includes a large quantity of logic gate circuits and is configured to implement permission control.

For example, the access controller may allocate different access address spaces to the processor 101 and the processor tracker 102, and the different access address spaces correspond to different storage areas in the memory 105. When the processor 101 or the processor tracker 102 subsequently accesses the memory 105, the access controller 103 may perform access authentication on the processor 101 or the processor tracker 102, to ensure that the processor 101 and the processor tracker 102 can access the memory 105 only in allowed access address spaces corresponding to the processor 101 and the processor tracker 102. For example, when the processor 101 or the processor tracker 102 needs to access a storage area in the memory 105, the processor 101 or the processor tracker 102 may access the storage area in the memory 105 by using the access controller 103. The access controller 103 may determine whether an address that needs to be accessed by the processor 101 or the processor tracker 102 is in the corresponding allowed access address space. If the address falls within the access address space, the processor 101 or the processor tracker 102 may be allowed to access the storage area. If the address falls outside the corresponding access address space, the processor 101 or the processor tracker 102 may be prohibited from accessing the storage area.

The security protection system 104 may be a security assessment module. For example, the security assessment module may be a TPCM, or may be another module used for security detection. The TPCM may be controlled by a TPM in a server, or may run independently. For example, the security protection system 104 may include a processor (such as a CPU), or may optionally include one or more of a memory (such as a ROM and a RAM), a hash acceleration engine, a timer (timer), and a watchdog (watchdog). The memory may store program instructions, and the processor may, by running the program instructions, enable the security protection system 104 to perform a corresponding security protection function. Therefore, the security protection system 104 may be understood as a small processor, is independent of the processor 101, and is used for a security assessment function. The security protection system 104 may perform, in a running process of the processor 101, security detection on software run by the processor 101, to ensure that the software run by the processor 101 is normal. For example, the security protection system 104 performs security detection on instructions loaded by the processor 101, data obtained by the processor 101, and the like, to ensure that the instructions loaded by the processor 21, the data obtained by the processor 21, and the like are not rewritten or are normally rewritten, that is, to prevent related data from being tampered with. When detecting that software run by the processor 101 is tampered with, the security protection system 104 may perform a security protection operation on the processor 101. The security protection operation herein may include but is not limited to: triggering an alarm, resetting the processor 101, rejecting a service requested by the software, indicating the processor 101 to stop running, indicating the processor 101 to stop running the software, disabling at least some functions of the software run by the processor 101, preventing the software from accessing data stored in the memory 105, or the like. For example, the security protection system 104 may access all storage areas in the memory 105, and may alternatively query and set an access control configuration of the access controller 103. For example, the security protection system 104 may query and modify a register configuration of the access controller 103, to configure an allocation rule of an access address space for the access controller 103.

The memory 105 may be a memory of the security assessment apparatus, and may include but is not limited to a random access memory (Random Access Memory, RAM) and a read-only memory (Read-Only Memory, ROM). The memory 105 may store instructions and data. The processor 101 or the security protection system 104 may perform various function applications and data processing of the security assessment apparatus by loading the instructions and obtaining the data. Specifically, the read-only memory may store startup key data that needs to be loaded when the processor 101 or the security protection system 104 is started. The random access memory may store instruction code such as an operating system or an application that needs to be run by the processor 101 or the security protection system 104 and data required for running, and may further include various intermediate operation results, data, configuration data, and the like that are generated by running a process. The RAM may include various types of volatile memories, such as a static random access memory (Static Random Access Memory, SRAM), a DRAM, a synchronous dynamic random access memory (Synchronous Dynamic Random Access Memory, SDRAM), and the like, and a nonvolatile memory.

In this embodiment of this application, the processor 101 is configured to run the instructions in the memory 105. The processor tracker 102 is configured to obtain first address information of a first instruction in the instructions in the memory 105, and store the first address information in a first storage area in the memory 105. The access controller 103 is configured to control the processor tracker 102 to access the first storage area in the memory 105, where the first storage area may be a storage area pre-allocated by the access controller 103 to the processor tracker 102, and the processor 101 is prohibited from accessing the first storage area. For example, when the processor tracker 102 writes the first address information into the first storage area, the access controller 103 is configured to perform authentication on access of the processor tracker 102 (that is, the operation of writing the first address information into the first storage area), and after the authentication, allows the processor tracker 102 to store the first address information in the first storage area. The security protection system 104 is configured to obtain the first address information from the first storage area, and assess security of the first instruction based on the first address information.

The first instruction may be one instruction, or may be an instruction sequence (that is, including a plurality of ordered instructions). For example, an address buffer space may be disposed in the processor tracker 102, and 4 KB of address information may be buffered in the address buffer space. Therefore, the processor tracker 102 may obtain one or more instructions in the instructions in real time, and store the one or more instructions in the address buffer space.

For example, the security protection system 104 may access all storage areas in the memory 105, so that the security protection system 104 may obtain the first address information by accessing the first storage area in the memory 105. The security protection system 104 may assess the security of the first instruction based on the first address information in the following two possible implementations. Details are as follows:

In a first possible implementation, the security protection system 104 is further configured to: when the first address information falls within a valid address range, determine that the first instruction is secure, where, for example, the valid address range includes a plurality of pieces of address information, and if the first address information is consistent with one piece of address information in the plurality of pieces of address information, it may be understood that the first address information falls within the valid address range, and it may be further determined that the first instruction is secure; or when the first address information falls outside the valid address range, determine that the first instruction is insecure, where, for example, the valid address range includes a plurality of pieces of address information, and if the first address information is inconsistent with each piece of address information in the plurality of pieces of address information, it may be understood that the first address information falls outside the valid address range, and it may be further determined that the first instruction is insecure.

In a second possible implementation, the security protection system 104 is further configured to: when the first address information falls within a valid address range, and the first instruction is consistent with a second instruction in the valid address range, determine that the first instruction is secure, where, for example, the valid address range includes a plurality of pieces of address information, and if the first address information is consistent with one piece of address information (an instruction of the address information is the second instruction) in the plurality of pieces of address information, an instruction of the first address information is the first instruction, and the first instruction is consistent with the second instruction, it may be determined that the first instruction is secure; or when the first address information falls outside the valid address range, or the first instruction is inconsistent with the second instruction in the valid address range, determine that the first instruction is insecure, where, for example, the valid address range includes a plurality of pieces of address information, an instruction of the first address information is the first instruction, instructions in the plurality of pieces of address information are a plurality of second instructions, and if the first address information is inconsistent with the plurality of pieces of address information, and the first instruction is inconsistent with the plurality of second instructions, it may be determined that the first instruction is insecure.

In the foregoing two possible implementations, the valid address range may be preset, or the processor 101 may send the valid address range to the security protection system 104 in a startup process, so that the security protection system 104 obtains the valid address range. The valid address range may be sent once, that is, the valid address range is sent only in a process of initial startup of an operating system, and does not need to be sent subsequently. In addition, when the security protection system 104 determines, based on either of the foregoing two possible implementations, that the first instruction is insecure, the security protection system 104 is further configured to perform a security protection operation on the processor 101. The security protection operation herein may include but is not limited to: triggering an alarm, resetting the processor 101, rejecting a service requested by software, indicating the processor 101 to stop running, indicating the processor 101 to stop running the software, disabling at least some functions of the software run by the processor 101, preventing the software from accessing data stored in the memory 105, or the like.

Further, the first instruction includes an instruction of a monitoring thread. In other words, the processor 101 may be configured to run the instruction of the monitoring thread. The processor tracker 102 may be configured to obtain address information of the instruction of the monitoring thread, and store the address information in the first storage area. The access controller 103 is configured to perform authentication on the operation in which the processor tracker 102 stores the address information in the first storage area, and after the authentication succeeds, allows the processor tracker 102 to store the address information in the first storage area. The security protection system 104 may be configured to obtain the address information of the instruction of the monitoring thread from the first storage area, and assess security of the instruction of the monitoring thread.

In this embodiment of this application, the action in which the processor tracker 102 stores the address information of the instruction of the monitoring thread in the first storage area may be triggered by the security protection system 104 by using an interrupt. Specifically, the security protection system 104 is further configured to send interrupt information to the processor 101, where the interrupt information indicates the processor 101 to start the monitoring thread (which may also be referred to as scheduling or running the monitoring thread). The processor 101 is further configured to: when receiving the interrupt information, start the instruction of the monitoring thread, and trigger the processor tracker 102 by using the monitoring thread. The processor tracker 102 is further configured to store the first address information in the first storage area based on the triggering of the monitoring thread, that is, store the address information of the instruction of the monitoring thread in the first storage area.

The process in which the processor 101 triggers the processor tracker 102 by using the monitoring thread may include the following steps: The processor 101 writes a specified register by using the monitoring thread. For example, the processor 101 sets a value of the specified register to 1 by using the monitoring thread. An initial value of the specified register may be 0 by default, and the specified register may be configured in advance. The processor tracker 102 determines, by detecting the value of the specified register, whether the processor tracker 102 is triggered, and determines that the processor tracker 102 is triggered if detecting that the value of the specified register is set to 1, or determines that the processor tracker 102 is not triggered if detecting that the value of the specified register is not 1. Alternatively, the processor 101 sends a trigger message to the processor tracker 102 by using the monitoring thread. The trigger message indicates the processor tracker 102 to store the obtained address information in the first storage area. Therefore, when the processor tracker 102 receives the trigger message, it may be determined that the processor tracker 102 is triggered. Alternatively, the processor 101 executes a related instruction of the processor tracker 102 by using the monitoring thread, to trigger the processor tracker 102.

In addition, the interrupt information sent by the security protection system 104 to the processor 101 may be non-maskable interrupt (non-maskable interrupt, NMI) information, that is, the interrupt information cannot be disabled. When receiving the interrupt information, the processor 101 immediately executes a task corresponding to the interrupt information. In actual application, the interrupt information may also be replaced with another non-maskable message. The message may be used to indicate the processor 101 to start the monitoring thread. When receiving the message, the processor 101 also immediately executes a task corresponding to the message.

In a possible implementation, the security protection system 104 may be further configured to send the interrupt information to the processor 101 when determining that a preset condition is satisfied. The preset condition may be one of the following: A specified event occurs, and preset duration for sending the interrupt information reaches. The specified event includes but is not limited to a facial recognition event, a fingerprint recognition event, an unlock event, a payment event, a data rewriting event, a first login event, or the like. In addition, the preset duration may be set in advance. For example, the preset duration may be a fixed value, or may be a plurality of change values (for example, each value corresponds to a different time period). This is not specifically limited in this embodiment of this application.

Optionally, the monitoring thread may be any thread in a kernel corresponding to the processor 101, or may be a thread in the kernel that is configured to monitor running status information of the processor 101. When the monitoring thread is a thread in the kernel that is configured to monitor the running status information of the processor, the processor 101 is further configured to: perform a security check on the running status information of the processor 101 by using the monitoring thread, to obtain a check result, and send the check result to the security protection system 104.

The running status information may include related coarse-grained status information in a running process of the processor 101, for example, the coarse-grained status information includes one or more pieces of information such as a memory consumption status, a page table status, and a register read and write status, and/or the running status information may further include related fine-grained status information in the running process of the processor 101, for example, the fine-grained status information may include one or more pieces of information such as a page table range, a health status of each running stack, a local variable, a global variable, and a key register.

Specifically, after the processor 101 starts the monitoring thread, the monitoring thread may obtain one or more pieces of running status information of the processor 101, and perform a security check on each piece of running status information to obtain a check result. For example, if the running status information includes a key register, the monitoring thread may determine whether a value of the key register is consistent with a preset value, and if the value of the key register is consistent with the preset value, may determine that the key register is secure, or if the value of the key register is inconsistent with the preset value, may determine that the key register is insecure. Alternatively, if the running status information further includes a global variable, the monitoring thread may determine whether an address range accessed by the global variable falls within a preset access address range, and if the address range falls within the preset access address range, may determine that the global variable is secure, or if the global variable falls outside the preset access address range, may determine that the global variable is insecure. Then, when the processor 101 determines check results of the plurality of pieces of running status information by using the monitoring thread, the processor 101 may be further configured to send the check results to the security protection system 104. Further, when the security protection system 104 receives the check results, if there is an insecure check result in the check results, the security protection system 104 may be further configured to perform a security protection operation on the processor 101. The security protection operation herein is consistent with the security protection operation described above. Details are not described herein again in this embodiment of this application. In actual application, if the monitoring thread is damaged (for example, modified or deleted) by a malicious program, according to the method described above, after sending the interrupt information to the processor 101, if the security protection system 104 determines that the first instruction corresponding to the first address information is invalid (that is, determining that the instructions currently executed by the processor 101 are invalid), the security protection system 104 may determine that the monitoring thread is damaged, to determine that the processor 101 is attacked.

Further, as shown in FIG. 3, the memory 105 may further include a second storage area configured to store image information of the processor 101, where the image information includes the instructions run by the processor 101. The image information may specifically include all file information on the processor 101. For example, the image information may include instructions corresponding to all applications or programs on the processor 101, and a system file, a boot file, and the like of the processor 101.

Further, the security protection system 104 may access all storage areas in the memory 105, so that the security protection system 104 may obtain the image information by accessing the second storage area in the memory 105, and assess integrity of the image information. Specifically, a specific process in which the security protection system 104 assesses the integrity of the image information may include the following steps: performing a hash operation on the image information to obtain a hash value; comparing the hash value with a preset hash value; when the hash value is consistent with the preset hash value, determining that the image information is complete; or when the hash value is inconsistent with the preset hash value, determining that the image information is incomplete. Further, if it is determined that the image information is incomplete, the security protection system 104 may be further configured to perform the foregoing security protection operation.

In the security assessment apparatus provided in embodiments of this application, in the running process of the processor 101, the processor tracker 102 is used to track and capture the first address information of the first instruction executed by the processor 101, and the access controller 103 controls the processor tracker 102 to store the first address information in the first storage area in the memory 105. Because the first instruction is the instructions currently executed by the processor 101, and the processor 101 is prohibited from accessing the first storage area, a hacker cannot tamper with information in the first storage area by using the processor 101. Even if the hacker damages integrity of the processor 101 by bypassing the original system image to run a fake system image, the security protection system 104 obtains the first address information from the first storage area, and still assesses the security of the first instruction based on the first address information, to improve accuracy and effectiveness of the security assessment, so as to ensure security of the processor 101.

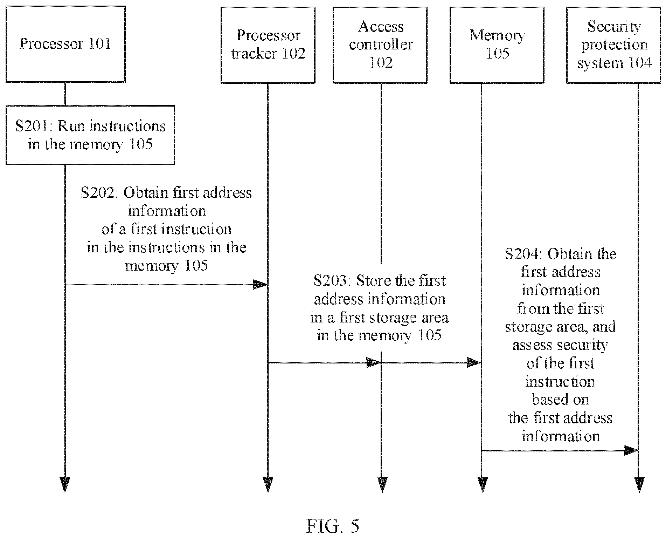

FIG. 5 is a schematic flowchart of a security assessment method for a processor according to an embodiment of this application. The method may be applied to the security assessment apparatus shown in FIG. 3. Refer to FIG. 5. The method includes the following steps. S201: The processor 101 runs instructions in the memory 105. S202: The processor tracker 102 obtains first address information of a first instruction in the instructions in the memory 105. S203: The processor tracker 102 stores the first address information in a first storage area in the memory 105, where the access controller 103 may perform authentication on access of the processor tracker 102 (that is, the operation of writing the first address information into the first storage area) and after the authentication, allow the processor tracker 102 to store the first address information in the first storage area, and the processor 101 is prohibited from accessing the first storage area. S204: The security protection system 104 is configured to obtain the first address information from the first storage area, and assess security of the first instruction based on the first address information.

The first instruction may be one instruction, or may be an instruction sequence (that is, including a plurality of ordered instructions). For example, an address buffer space may be disposed in the processor tracker 102, and 4 KB of address information may be buffered in the address buffer space. Therefore, the processor tracker 102 may obtain one or more instructions in the instructions in real time, and store the one or more instructions in the address buffer space. In addition, the first storage area may be a storage area pre-allocated by the access controller 103 to the processor tracker 102, and the processor 101 is prohibited from accessing the first storage area. For example, the access controller 103 sends address information corresponding to the first storage area to the processor tracker 102 in advance.

In a possible implementation, a specific process in which the security protection system 104 assesses the security of the first instruction based on the first address information may include the following steps: When the first address information falls within a valid address range, determining that the first instruction is secure; or when the first address information falls outside the valid address range, determining that the first instruction is insecure. In another possible implementation, a specific process in which the security protection system 104 assesses the security of the first instruction based on the first address information may include the following steps: When the first address information falls within the valid address range, and the first instruction is consistent with a second instruction within the valid address range, determining that the first instruction is secure; or when the first address information falls outside the valid address range, or the first instruction is inconsistent with the second instruction within the valid address range, determining that the first instruction is insecure.

In the foregoing two possible implementations, the valid address range may be preset, or the processor 101 may send the valid address range to the security protection system 104 in a startup process, so that the security protection system 104 obtains the valid address range. In addition, when the security protection system 104 determines, based on either of the foregoing two possible implementations, that the first instruction is insecure, the security protection system 104 is further configured to perform a security protection operation on the processor 101. The security protection operation herein may include but is not limited to: triggering an alarm, resetting the processor 101, rejecting a service requested by software, indicating the processor 101 to stop running, indicating the processor 101 to stop running the software, disabling at least some functions of the software run by the processor 101, preventing the software from accessing data stored in the memory 105, or the like.

Further, the first instruction includes an instruction of a monitoring thread. That is, the processor 101 runs the instruction of the monitoring thread, the processor tracker 102 obtains address information of the instruction of the monitoring thread, and the access controller 103 controls the processor tracker 102 to store the address information in the first storage area. Optionally, the action in which the processor tracker 102 stores the address information of the instruction of the monitoring thread in the first storage area may be triggered by the security protection system 104 by using an interrupt.

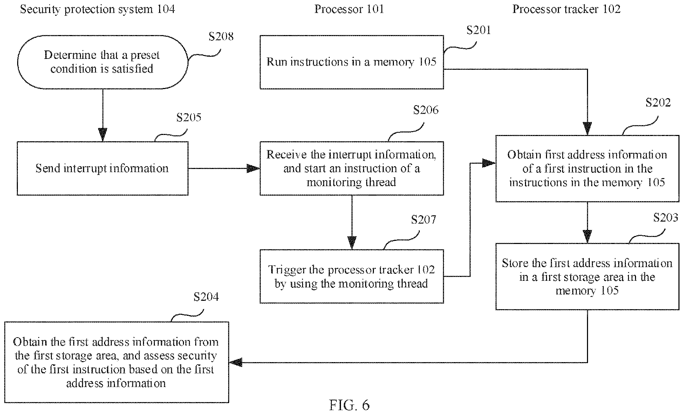

Specifically, as shown in FIG. 6, the method further includes the following steps. S205: The security protection system 104 sends interrupt information to the processor 101, where the interrupt information indicates the processor 101 to start the monitoring thread. S206: When receiving the interrupt information, the processor 101 starts the instruction of the monitoring thread, that is, runs the monitoring thread. S207: The processor 101 triggers the processor tracker 102 by using the monitoring thread, so that the processor tracker 102 stores the first address information in the first storage area based on the triggering of the monitoring thread, that is, stores the address information of the instruction of the monitoring thread in the first storage area in S203. Specifically, the access controller 103 may control the processor tracker 102 to store the address information of the instruction of the monitoring thread in the first storage area.

The process in which the processor 101 triggers the processor tracker 102 by using the monitoring thread may include the following steps: The processor 101 writes a specified register by using the monitoring thread. For example, the processor 101 sets a value of the specified register to 1 by using the monitoring thread. An initial value of the specified register may be 0 by default, and the specified register may be configured in advance. The processor tracker 102 determines, by detecting the value of the specified register, whether the processor tracker 102 is triggered. For example, if detecting that the value of the specified register is set to 1, the processor tracker 102 determines that the processor tracker 102 is triggered, or if detecting that the value of the specified register is not 1, the processor tracker 102 determines that the processor tracker 102 is not triggered. Alternatively, the processor 101 sends a trigger message to the processor tracker 102 by using the monitoring thread. The trigger message indicates the processor tracker 102 to store the obtained address information in the first storage area. Therefore, when the processor tracker 102 receives the trigger message, it may be determined that the processor tracker 102 is triggered.

In addition, the interrupt information sent by the security protection system 104 to the processor 101 may be non-maskable interrupt (non-maskable interrupt, NMI) information, that is, the interrupt information cannot be disabled. When receiving the interrupt information, the processor 101 immediately executes a task corresponding to the interrupt information. In actual application, the interrupt information may also be replaced with another non-maskable message. The message may be used to indicate the processor 101 to start the monitoring thread. When receiving the message, the processor 101 also immediately executes a task corresponding to the message.

Optionally, as shown in FIG. 6, the method further includes the following steps. S208: The security protection system 104 determines that a preset condition is satisfied. The preset condition may be one of the following: A specified event occurs, and preset duration for sending the interrupt information reaches. The specified event includes but is not limited to a facial recognition event, a fingerprint recognition event, an unlock event, a payment event, a data rewriting event, a first login event, or the like. In addition, the preset duration may be set in advance. For example, the preset duration may be a fixed value, or may be a plurality of change values (for example, each value corresponds to a different time period). This is not specifically limited in this embodiment of this application.

Further, the monitoring thread may be any thread in a kernel run by the processor 101, or may be a thread in the kernel that is configured to monitor running status information of the processor 101. When the monitoring thread is a thread in the kernel that is configured to monitor the running status information of the processor, the processor 101 is further configured to: perform a security check on the running status information of the processor 101 by using the monitoring thread, to obtain a check result, and send the check result to the security protection system 104. Optionally, when the security protection system 104 receives check results, if there is an insecure check result in the check results, the security protection system 104 may further perform a security protection operation on the processor 101. The security protection operation herein is consistent with the security protection operation described above. Details are not described herein again in this embodiment of this application.

The running status information may include related coarse-grained status information in a running process of the processor 101, for example, the coarse-grained status information includes one or more pieces of information such as a memory consumption status, a page table status, and a register read and write status, and/or the running status information may further include related fine-grained status information in the running process of the processor 101, for example, the fine-grained status information may include one or more pieces of information such as a page table range, a health status of each running stack, a local variable, a global variable, and a key register.

Specifically, after the processor 101 starts the monitoring thread, the monitoring thread may obtain one or more pieces of running status information of the processor 101, and perform a security check on each piece of running status information to obtain a check result. For example, if the running status information includes a key register, the monitoring thread may determine whether a value of the key register is consistent with a preset value, and if the value of the key register is consistent with the preset value, may determine that the key register is secure, or if the value of the key register is inconsistent with the preset value, may determine that the key register is insecure. Alternatively, if the running status information further includes a global variable, the monitoring thread may determine whether an address range accessed by the global variable falls within a preset access address range, and if the address range falls within the preset access address range, may determine that the global variable is secure, or if the global variable falls outside the preset access address range, may determine that the global variable is insecure.

Further, the memory 105 may further include a second storage area configured to store image information of the processor 101, where the image information includes the instructions run by the processor 101. The image information may specifically include all file information on the processor 101. For example, the image information may include instructions corresponding to all applications or programs on the processor 101, and a system file, a boot file, and the like of the processor 101.

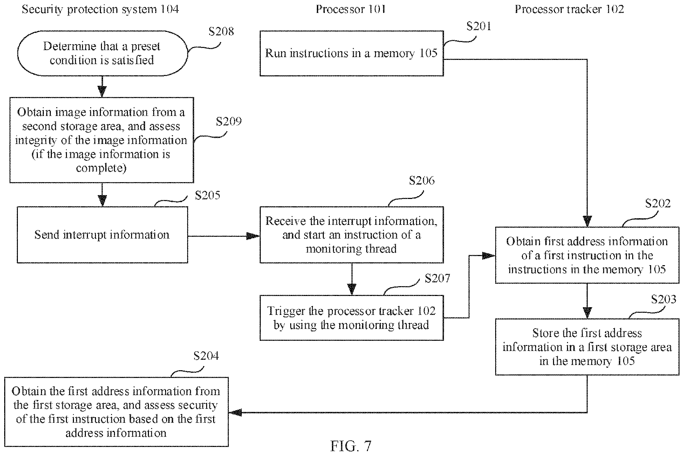

Correspondingly, as shown in FIG. 7, the method further includes: S209: The security protection system 104 obtains the image information from the second storage area, and assesses integrity of the image information. Specifically, a specific process in which the security protection system 104 assesses the integrity of the image information may include the following steps: performing a hash operation on the image information to obtain a hash value; comparing the hash value with a preset hash value; when the hash value is consistent with the preset hash value, determining that the image information is complete; when the hash value is inconsistent with the preset hash value, determining that the image information is incomplete; or further, if it is determined that the image information is incomplete, performing the foregoing security protection operation. The foregoing step S209 may be performed after S208 and before S205, and after an assessment result is that the image information is complete, the interrupt information is sent to the processor 101 in S205.

It should be noted that for a specific implementation process of the foregoing steps S201 to S209, refer to the related descriptions of the processor 101, the processor tracker 102, the access controller 103, and the security protection system 104 in the apparatus embodiments shown in FIG. 3 and FIG. 4. Details are not described herein again in this embodiment of this application.

In the security assessment method provided in embodiments of this application, in the running process of the processor 101, the processor tracker 102 is used to track and capture the first address information of the first instruction executed by the processor 101, and the access controller 103 controls the processor tracker 102 to store the first address information in the first storage area in the memory 105. Because the first instruction is the instructions currently executed by the processor 101, and the processor 101 is prohibited from accessing the first storage area, a hacker cannot tamper with information in the first storage area by using the processor 101, and after obtaining the first address information from the first storage area, the security protection system 104 can assess the security of the first instruction based on the first address information, to improve accuracy and effectiveness of the security assessment, so as to ensure security of the processor 101.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A security assessment apparatus for a processor, wherein the apparatus comprises:
a processor, configured to run instructions in a memory;
an access controller, configured to control a processor tracker to access a first storage area in the memory, wherein the processor is prohibited from accessing the first storage area;
the processor tracker, configured to obtain first address information of a first instruction in the instructions in the memory, and store the first address information in the first storage area; and
a security protection system, configured to obtain the first address information from the first storage area, and assess security of the first instruction based on the first address information.

2. The apparatus according to claim 1, wherein the security protection system, the processor, the processor tracker, and the access controller are located in a system on chip SoC.

3. The apparatus according to claim 1 or 2, wherein the security protection system is further configured to:
when the first address information falls within a valid address range, determine that the first instruction is secure; or
when the first address information falls outside the valid address range, determine that the first instruction is insecure.

4. The apparatus according to claim 1 or 2, wherein the security protection system is further configured to:
when the first address information falls within a valid address range, and the first instruction is consistent with a second instruction within the valid address range, determine that the first instruction is secure; or
when the first address information falls outside the valid address range, or the first instruction is inconsistent with a second instruction within the valid address range, determine that the first instruction is insecure.

5. The apparatus according to any one of claims 1 to 4, wherein the first instruction comprises an instruction of a monitoring thread;
the security protection system is further configured to send interrupt information to the processor, wherein the interrupt information indicates the processor to start the monitoring thread;
the processor is further configured to: when receiving the interrupt information, start the instruction of the monitoring thread, and trigger the processor tracker by using the monitoring thread; and
the processor tracker is further configured to store the first address information in the first storage area based on the triggering of the monitoring thread.

6. The apparatus according to claim 5, wherein the processor is further configured to:
perform a security check on running status information of the processor by using the monitoring thread, to obtain a check result, and send the check result to the security protection system.

7. The apparatus according to any one of claims 1 to 6, wherein the memory further comprises a second storage area configured to store image information of the processor, and the image information comprises the instructions; and
the security protection system is further configured to obtain the image information from the second storage area, and assess integrity of the image information.

8. The apparatus according to claim 7, wherein the security protection system is further configured to:
perform a hash operation on the image information to obtain a hash value;
compare the hash value with a preset hash value; and
when the hash value is consistent with the preset hash value, determine that the image information is complete; or
when the hash value is inconsistent with the preset hash value, determine that the image information is incomplete.

9. A security assessment method for a processor, wherein the method comprises:
running, by a processor, instructions in a memory;
controlling, by an access controller, a processor tracker to access a first storage area in the memory, wherein the processor is prohibited from accessing the first storage area;
obtaining, by the processor tracker, first address information of a first instruction in the instructions in the memory, and storing the first address information in the first storage area; and
obtaining, by a security protection system, the first address information from the first storage area, and assessing security of the first instruction based on the first address information.

10. The method according to claim 9, wherein the assessing security of the first instruction based on the first address information comprises:
when the first address information falls within a valid address range, determining that the first instruction is secure; or
when the first address information falls outside the valid address range, determining that the first instruction is insecure.

11. The method according to claim 9, wherein the assessing security of the first instruction based on the first address information comprises:
when the first address information falls within a valid address range, and the first instruction is consistent with a second instruction within the valid address range, determining that the first instruction is secure; or
when the first address information falls outside the valid address range, or the first instruction is inconsistent with a second instruction within the valid address range, determining that the first instruction is insecure.

12. The method according to any one of claims 9 to 11, wherein the instructions in the memory comprise an instruction of a monitoring thread, and the method further comprises:
sending, by the security protection system, interrupt information to the processor, wherein the interrupt information indicates the processor to start the monitoring thread;
when receiving the interrupt information, starting, by the processor, the instruction of the monitoring thread, and triggering the processor tracker by using the monitoring thread; and
storing, by the processor tracker, the first address information in the first storage area based on the triggering of the monitoring thread.

13. The method according to claim 12, wherein the method further comprises:
performing, by the processor, a security check on running status information of the processor by using the monitoring thread, to obtain a check result, and sending the check result to the security protection system.

14. The method according to any one of claims 9 to 13, wherein the memory further comprises a second storage area configured to store image information of the processor, and the image information comprises the instructions, and the method further comprises:
obtaining, by the security protection system, the image information from the second storage area, and assessing integrity of the image information.

15. The method according to claim 14, wherein the assessing, by the security protection system, integrity of the image information comprises:
performing a hash operation on the image information to obtain a hash value;
comparing the hash value with a preset hash value; and
when the hash value is consistent with the preset hash value, determining that the image information is complete; or
when the hash value is inconsistent with the preset hash value, determining that the image information is incomplete.
